# FASCICULE DE BREVET EUROPEEN

(11) **EP 0 465 351 B1**
(45) Date de publication et mention de la délivrance du brevet: **28.02.1996**
(21) Numéro de dépôt: 91401823.9
(22) Date de dépôt: 03.07.1991
(51) Int. Cl.: C08G 18/54, C08G 18/62, C09J 175/04

(54) **Résines tackifiantes modifiées pour adhésifs thermofusibles réticulables par l'humidité; adhésifs thermofusibles les incorporant et leurs applications**
Modifizierte klebrigmachende Harze für feuchtigkeitshärtende Schmelzklebstoffe, diese enthaltende Schmelzklebstoffe und ihre Verwendungsmöglichkeiten
Modified tacky resins for thermofusable humidity curable adhesives, the thermofusable adhesives containing them and their applications

(30) Priorité: 05.07.1990 FR 9008532
(43) Date de publication de la demande: 08.01.1992
(73) Titulaire: CECA S.A., F-92800 Puteaux (FR)
(72) Inventeur: Jammet, Jean Claude, F-27190 Grisolles (FR)
(74) Mandataire: Haicour, Philippe

(56) Documents cités:
- EP-A- 0 109 694
- EP-A- 0 289 945
- EP-A- 0 294 271
- EP-A- 0 302 620
- EP-A- 0 380 379
- CHEMICAL ABSTRACTS, vol. 97, no. 16, octrobre 1982, page 58, colonne 1, abrégé no. 128790c, Columbus, Ohio, US; & JP-A- 82 63 372 (KOYO SANGYO CO., LTD) 16-04-1982
- CHEMICAL ABSTRACTS, vol. 107, no. 8, août 1987, page 61, colonne 1, abrégé no. 60343b, Columbus, Ohio, US; & DD-A-241 475 (VEB CHEMISCH-TECHNISCHE WERKE LEIPZIG) 24-12-1986

## Description

La présente invention se rapporte à de nouveaux composants perfectionnés pour adhésifs thermofusibles destinés à se réticuler lentement après mise en place.

Les adhésifs thermofusibles sont des compositions destinées à assurer la liaison entre des matériaux divers, qui se présentent sous forme de compositions solides et tenaces à température ambiante, qui sont fusibles par élévation de température et qui développent alors des propriétés collantes dans leur état fondu, et qui continuent à adhérer fortement aux supports sur lesquels elles ont été déposées lors de leur retour à l'état solide.

D'une façon très générale, les adhésifs thermofusibles sont des compositions basées sur un polymère thermofusible, par exemple EVA (copolymère éthylène-acétate de vinyle), APAO (poly α-oléfine atactique), caoutchouc thermoplastique, et qui comprennent en outre et suivant les cas :
- une résine tackifiante, substance qui se définit par ses propriétés physico-chimiques propres, et notamment sa compatibilité à chaud avec les bases polymériques et par les propriétés thermomécaniques qu'elle induit dans les mélanges polymériques qui la contiennent, à savoir une amélioration de leur mouillabilité et de leur fluidité, une augmentation de leur température de transition de vitreuse T_{g} et un abaissement de leur module ;
- de plastifiants, substances dont le rôle est d'abaisser la température de transition vitreuse T_{g} et d'assouplir le mélange ;
- de cires et/ou de paraffines, qui agissent comme simples charges dans le matériau solidifié, ce qui en accentue le comportement élastique et en améliore les performances mécaniques, et comme solvants dans le produit fondu, ce qui en diminue la viscosité ;
- d'huiles, qui diminuent la viscosité et améliorent la souplesse à température ambiante ;
- de charges minérales, ballast (craie) ou pigments (oxyde de titane).

On utilise largement les adhésifs thermofusibles dans l'industrie, par exemple dans l'emballage, l'ameublement, l'étiquetage, la reliure, le sanitaire, où ils sont appréciés pour leur prix modéré, leur facilité de mise en oeuvre, leur rapidité de prise, leur absence de solvant, et d'une façon générale leur faible toxicité. Ils présentent toutefois deux défauts majeurs. D'une part leur résistance mécanique est faible, et d'autre part leur tenue à la chaleur est très limitée ; ce qui en restreint l'utilisation au collage non structural, c'est à dire au collage de matériau ne présentant en eux-mêmes qu'une faible résistance mécanique, tels le papier, les films plastiques de faible épaisseur, le carton, les non-tissés. Leur médiocre tenue à la chaleur est le corollaire de leur thermoplasticité, et trouve son origine dans leur composition elle-même, basée sur des polymères thermoplastiques comme les copolymères éthylène/vinylacétate, les caoutchoucs thermoplastiques, le propylène atactique, limite leur utilisation à une plage de température d'environ -30°C/+60°C.

Le collage avec un adhésif thermofusible s'effectue par dépôt du produit chaud (environ 160°C) et peu visqueux (viscosité comprise approximativement entre 0,1 et 100 Pa.s) sur le support, puis contre-collage quasi immédiat du second support. La prise est réalisée par simple refroidissement, par le passage d'une transitions de phase : cristallisation et / ou transition vitreuse. Ce système est parfaitement réversible, et si l'on réchauffe l'adhésif, il refond. Mais avant même que de refondre, il perd une partie de sa ténacité, ce qui se manifeste par un tendance au fluage, dont il peut résulter le déplacement relatif des pièces collées, voire leur détachement total. Cet inconvénient peut même se manifester avec certains adhésifs très souples dès la température ambiante.

Depuis quelques années, les chimistes ont exploré plusieurs voies pour tenter de remédier à ce défaut. On peut les ranger en produits bicomposants et produits monocomposants. On entend par bicomposant une formule qui est nécessairement présentée sous la forme de deux produits qu'il faut mélanger au moment de l'emploi, parce que le mélange est en soi réactif et que ses propriétés évoluent dès qu'il est réalisé. Le produit monocomposant est constitué, comme son nom l'indique, par un seul produit, stable au stockage, au moins pendant une durée raisonnable. La voie des produits bicomposants, notamment à base d'époxides est lourde et de mise en oeuvre délicate. Celle des produits monocomposants a été plus fertile : monocomposants à haute température de fusion ; monocomposants réticulables par la chaleur, par l'oxygène de l'air, par irradiation (UV, jet d'électrons...), par l'humidité de l'air ou des supports à coller.

L'amélioration de la tenue à la chaleur par choix de composants thermofusibles à haute température de cristallisation a donné naissance aux adhésifs thermofusibles à base de polyamides et de polyesters. Ces produits, qui restent d'un prix élevé, ont l'inconvénient de n'être applicable qu'à température élevée et subissent de ce fait une dégradation thermique importante ; par ailleurs la qualité du collage est médiocre dans les conditions d'application ordinaires, sans doute parce que la cristallisation de ces produits est trop rapide et est assortie d'un mauvais mouillage.

La réticulation chimique peut être réalisée par la chaleur, un peu comme on réticule les caoutchoucs par vulcanisation. Le principe chimique en est très variable. On connaît une voie peroxydique avec monomère et / ou copolymère à doubles liaisons résiduelles potentiellement réactives, par exemple copolymères acrylique, ou les uréthanes-acrylates de la société Baxenden. Le produit, qui présente une transition de phase à environ 40-80°C, est appliqué à environ 60-100°C et réticulé à haute température (environ 180°C pendant 10 minutes). On a également emprunté la voie de la polycondensation de polymères de type EVA modifiés par un hydroxy-acrylate, et qui se réticulent à environ 180°C pendant 10 minutes avec un isocyanate bloqué. Voir la demande de brevet français publiée sous le n° FR 2 616 155 (ATOCHEM), la demande de brevet européen n° 0 302 620 (EXXON CHEMICAL).

Ces voies sont contraignantes, elles imposent une cuisson à haute température, contraire à la plupart des applications. De plus, ces produits sont sensibles à un début de réticulation lors de la mise en oeuvre, ce qui risque d'engendrer des désordres dans les machines d'application.

Les formulations à réticulation chimique par l'oxygène de l'air font appel à des alkylboranes. Elles ont un caractère plus expérimental qu'industriel.

La réticulation par irradiation U.V. a été proposée par Dynamit Nobel avec des polyesters sensibles aux radiations U.V., qui autorisent une mise en oeuvre vers 50°C, et sur le même principe par SHELL avec son KRATON 1320 X. Cette voie n'est applicable qu'à la réticulation de faibles épaisseurs de produit, et l'application en est très spécifique (par exemple, application aux produits d'enduction).

La réticulation par l'humidité est exploitée depuis de nombreuses années pour des adhésifs à base de polyuréthanes-polyols à basse température de fusion, c'est-à-dire une T_{f} comprise entre 30 et 50°C et/ou à haute température de transition vitreuse, c'est-à-dire une T_{g} comprise entre -40°C et +35°C (voir notamment le brevet européen n° 0 107 097, FULLER). On la met également en oeuvre dans les mastics silicones et les adhésifs thermofusibles à base d'EVA greffés avec un silanol (voir notamment le brevet britannique n° 2 197 326, SWIFT). Pour ces derniers produits, la stabilité à chaud est très médiocre et on observe un très fort accroissement de la viscosité quand le produit reste exposé plus de trois heures à environ 150°C. C'est évidemment une contrainte majeure dans la fabrication et l'utilisation des adhésifs thermofusibles.

On a aussi proposé des adhésifs basés sur des mélanges EVA/prépolymères polyuréthane liquides/résine tackifiante, dans lesquels le prépolymère PPU (on utilisera par la suite le terme abrégé prépolymère PPU pour désigner les prépolymères polyuréthanes) est une base élastomère classique quasiment liquide à température ambiante, présentant des groupements libres -NCO en excès qui la rendent réticulable par l'eau. Les prépolymères PPU s'obtiennent de façon connue, par réaction d'un excès de polyisocyanate monomère sur des polyols monomères.

On a ainsi formulé des compositions réticulables à l'humidité, voir par exemple EP-A-289945, comportant outre un polymère thermoplastique de type EVA, des prépolymères PPU et des résines tackifiantes ordinaires ou modifiées (EP-A-109694) en vue d'améliorer leur pouvoir tackifiant.

Des études ont montré que pour obtenir une réticulation correcte, le taux de prépolymère PPU dans la formulation devait atteindre environ 30% en poids. Le produit se trouve alors fortement ramolli, et sa cohésion à température ambiante est ramenée très en dessous de celle d'un adhésif thermofusible classique, tant que la réticulation ne s'est pas opérée, ce qui prend environ 24 heures.

La demanderesse a maintenant trouvé que l'on pouvait conférer une réactivité à l'humidité de certaines bases classiques de la formulation des adhésifs thermofusibles, à savoir les résines tackifiantes, par réaction avec des isocyanates di- ou multifonctionnels, et exploiter de tels composants modifiés pour la formulation d'adhésifs thermofusibles monocomposants post-réticulables par l'humidité, utiles pour la réalisation de collages résistant au fluage à des températures qui peuvent atteindre 160°C.

La présente invention réside donc dans des résines tackifiantes modifiées pour la formulation d'adhésifs thermoplastiques monocomposants à excellente tenue au fluage, résines modifiées qui résultent de la réaction de polyisocyanates sur des résines tackifiantes, et dont le taux d'isocyanate libre est compris entre 1,5 et 20% , préférentiellement entre 5 et 15% .

Les résines tackifiantes modifiables utiles pour l'invention appartiennent au groupe constitué par les terpènes phénoliques, les styrènes (styrène, α-méthylstyrène) modifiés par le phénol, les colophanes et dérivés, notamment leurs esters de polyols. Toutes ces substances possèdent des groupement -OH, appartenant à des fonctions alcools ou carboxyliques, susceptibles de réagir sur les isocyanates. Tout mélange de ces résines avec des polyols polyéthers et/ou polyesters peuvent également conduire à un produit post-réticulable. On trouvera en particulier une description intéressante des résines du type terpène diphénolique, particulièrement utiles pour l'invention dans les publications de brevets français N° 2 313 817 et 2 307 836 (Dérivés Résiniques et Terpéniques).

Des cires utiles pour l'invention appartiennent au groupe :
- des polyéthylènes-glycols,
- des copolymères éthylène / acide acrylique ;
- des copolymères éthylène / anhydride maléique.

Les polyisocyanates que l'on utilise pour obtenir les résines tackifiantes modifiées, selon l'invention, sont des polyisocyanates aliphatiques ou aromatiques. On préfère les diisocyanates, et particulièrement le diphénylméthane diisocyanate (MDI).

Tous ces composants modifiés selon l'invention sont préparables selon un processus que l'on peut parfaitement maîtriser et qui garantit leur qualité sont utilisables comme composants dans la fabrication d'adhésifs thermofusibles réticulables. Ces adhésifs thermofusibles réticulables, qui font également partie de l'invention, comprennent en général de 5 à 80% d'un polymère thermoplastique, de 0 à 60% de cires et/ou de paraffines, de 10 à 80% de résines tackifiantes, (ces pourcentages étant des limites à l'intérieur desquelles chacun des composants peut être pris, dans le respect d'une composition finale dont la somme des composants est, bien entendu, fixée à 100%). Les bases polymères utilisées sont celles qui sont habituellement choisies par l'homme du métier pour des formulations contenant une résine tackifiante, c'est-à-dire des bases dont la viscosité à l'état fondu se situent entre 0,1 et 200 Pa.s.; les résines tackifiantes sont les résines modifiées comme indiquées ci-dessus, ou encore des mélanges de résines ordinaires et modifiées; dans tous les cas, la teneur globale de l'adhésif en composants modifiés devra être telle que le taux d'isocyanate de l'adhésif formulé soit compris entre environ 1 et 15, y compris la contribution que peut apporter à la formulation la présence éventuelle d'un prépolymère PPU. On leur applique les méthodes de formulation et de conditionnement bien connues de l'homme de l'art pour la fabrication des adhésifs thermofusibles ordinaires. Il y a évidemment lieu de prendre toute précaution pour éviter le contact de ces composants réactifs avec l'humidité, en particulier lors de leur stockage et lors de leur mise en oeuvre pour la fabrication des adhésifs dans lesquelles ils sont incorporés.

Pour leur utilisation, les adhésifs thermofusibles réticulables selon l'invention peuvent être traités comme des adhésifs thermofusibles classiques, en prenant, là encore, les précautions nécessaires pour les isoler de l'humidité ambiante tant qu'ils n'ont pas été définitivement mis en place. On peut en particulier les mettre en oeuvre industriellement à l'aide des machines spéciales antérieurement développées par des sociétés telles que NORDSON - MELTEX, pour les adhésifs thermofusibles réticulables par polymères PPU

L'invention met ainsi à la disposition de l'homme du métier un moyen technique nouveau :
- pour réaliser des adhésifs thermofusibles à meilleure tenue au fluage, à partir de bases de formulations classiques ;
- pour en moduler à volonté leur caractéristiques, et notamment
- pour réaliser des produits à temps de prise très court, fondé sur la cristallisation très rapide de l'éthylène des EVA et des éthylène-acrylates, sur la température de transition vitreuse du styrène (Tg 90°C) pour le cas des caoutchoucs thermoplastiques fonctionnalisés ;
- pour formuler des compositions thermoadhésives à temps ouvert long aussi bien avec des bases caoutchoucs thermoplastiques fonctionnalisés que les bases citées plus haut où le prépolymère PPU joue au départ un rôle de plastifiant ;
- pour en améliorer la souplesse à l'aide des bases polymères réticulables ;
- pour en améliorer la cohésion initiale du produit, grâce à la réduction de la quantité de prépolymère PPU et sa compensation par la résine tackifiante réticulable.

Les thermoadhésifs selon l'invention échappent aux défauts bien connus des adhésifs thermofusibles réticulables de l'art antérieur. Ils ont par exemple une bien plus faible sensibilité à la surchauffe que EVA silanés, un meilleur temps de prise, un plus long temps ouvert et une meilleure cohésion que les thermoadhésifs constitués de prépolymères PPU, une bien meilleure cohésion que les systèmes EVA / PPU / résine tackifiante.

Parmi les application intéressantes et utiles des adhésifs thermoadhésifs selon l'invention, on peut citer la fabrication des éponges-grattoirs. On réalise habituellement ces objets en collant un mat abrasif sur un bloc d'éponge cellulosique à l'aide d'une colle thermofusible, et l'on voit tout l'avantage que l'on peut tirer de l'utilisation d'une colle thermofusible selon l'invention, qui leur confère une excellente résistance à l'eau très chaude, voire aux températures des lave-vaisselle dans lesquelles elles peuvent être accidentellement introduites. Une autre application intéressante est la fabrication des matelas stérilisables en mousse, dans laquelle on peut disposer, grâce à l'invention, de colles thermofusibles avec le long temps ouvert exigé par l'application par pulvérisation et le contre-collage des mousses après un certain délai, l'assemblage étant rendu résistant à la stérilisation par sa post-réticulation spontanée. On peut citer également le collage des chants pour les menuiseries appelées à être exposées à des températures élevées, par exemple celles des containers de transport ou des halls de magasinage, et le collage des emballages devant résister aux micro-ondes.

### EXEMPLES

Dans les exemples qui suivent, on fait référence à des mesures de temps ouvert et au test SAFT.

La mesure du temps ouvert s'opère en déposant sur un support de carton, un trait de adhésif thermofusible à environ 170°C, d'environ 1,5 mm de largeur. On laisse refroidir à la température ambiante jusque l'on observe plus un bon collage sur un second support de carton contre-collé. Le temps d'attente maximum pour atteindre un bon collage (arrachement par défibrement du carton) est le temps ouvert.

Pour effectuer le test SAFT, on effectue un collage d'éprouvette de "cisaillement" en carton, de 2,5 cm X 2,5 cm. Pour cela, on applique à 130°C deux cordons d'adhésif d'environ 1mm de diamètre, distants d'environ 2,5 cm, à l'extrémité d'une bande de carton. On contre-colle une seconde bande de carton en porte-à-faux. Le temps de prise du produit est de quelques secondes (10 secondes environ). Pour obtenir le défibrement du carton, on applique une force de 0,5 daN dans le plan, de l'assemblage. En pratique, on suspend l'assemblage verticalement, on fixe au bout de l'éprouvette une masse de 500 g et on fait subir à l'ensemble une montée de température de 5 degrés par demi-heure à partir de 40°C. La tenue SAFT est la température à laquelle l'assemblage cède.

La température de fluage immédiate est la température obtenue pour un assemblage ayant vieilli moins de deux heures avant le test. La température de fluage peut être également mesurée sur éprouvette abandonnée à un vieillissement de plusieurs jours à la température ambiante.

Dans les exemples qui suivent, on a utilisé les résines tackifiantes :
- Uratack 68520 (DSM) qui est une résine d'Ó-méthyl styrène modifié par le phénol, d'indice d'hydroxyle I_{OH} = 36 ;
- résines 8923, 8924, 8941 (DRT) qui sont des résines de type terpène-phénol, d'indice d'hydroxyle de 100, 120 et 129 respectivement.

Une caractéristique importante des résines modifiées selon l'invention est leur taux d'isocyanate libre. Elle s'exprime en poids en grammes de NCO libre pour 100 grammes de résine modifiée; on la détermine selon la norme Afnor 52132.

### Exemple 1

### a) - Synthèse de la résine réticulable R1.

Pour obtenir la réaction souhaitée et un % de NCO final de 10% , on porte à 100°C pendant 4 heures un mélange de
. Résine Uratack 68520 185 g
. MDI 100 g
. Triéthylamine 0,2 %
(La triéthylamine fonctionne comme catalyseur de réaction de -OH sur l'isocyanate).

### b) - Formulation de l'adhésif termofusible.

On prépare l'adhésif par mélange intime des ingrédients suivants à 130°C,poursuivi pendant environ 2 heures.

| | |
|---|---|
| EVA 40/55 | 10,5 % en poids |
| EVA 45/7,5 | 9,5 % |
| Résine R1 | 50 |
| Prépolymère PPU (XPU 6778A1) | 30 |

où l'EVA 40/55 est un copolymère éthylène-acétate de vinyle à 40% d'acétate de vinyle, de Melt Index = 55;
où l'EVA 45/7,5 est un copolymère éthylène-acétate de vinyle à 45% d'acétate de vinyle, de Melt Index = 7,5;
où le prépolymère PPU XPU 6778A1 est un prépolymère de CECA S.A, formé à partir de MDI et dont le taux de NCO est de 7.

L'adhésif ainsi formulé a un taux de NCO final de 7,1% .

### c) - Evaluation des performances de l'adhésif termofusible.

On a mesuré ici, selon le test SAFT, une température de rupture de 60°C sur éprouvette cisaillée 2 heures après le collage, et supérieure à 160°C pour l'éprouvette cisaillée 5 jours après le collage.

### Exemple 2

On réalise une formulation d'adhésif thermofusible dans les mêmes conditions que dans l'exemple 1, mais sur une composition

| | |
|---|---|
| Résine R 1 | 40 |
| EVA 33/400 | 35 |
| EVA 28/800 | 25 |

où l'EVA 33/400 est un copolymère éthylène-acétate de vinyle à 33% d'acétate de vinyle, de Melt Index = 400;
où l'EVA 28/800 est un copolymère éthylène-acétate de vinyle à 28% d'acétate de vinyle, de Melt Index = 800.

L'adhésif ainsi formulé a un taux de NCO final de 4% . La réticulation de cette formule est longue. La tenue SAFT immédiate (après 2 heures) est de 65°C; la tenue SAFT après 15 jours de vieillissement à l'air ambiant de 115°C.

### Exemple 3

Modification de résines tackifiantes à base de terpène-phénol 8923 et 8924 (DRT).

### a) - Synthèse de la résine réticulable R2.

Pour obtenir la réaction souhaitée, avec un taux final d'isocyanate de 7% , on porte à 90°C pendant environ 4 heures un mélange de

| | |
|---|---|
| DRT 8923 | 100 g |
| DRT 8924 | 41 g |
| MDI | 80 g |
| DBTL (dibutyl dilaurate d'étain), catalyseur | 0,03 % |

### b) - Formulation de l'adhésif thermofusible.

On prépare l'adhésif par mélange des ingrédients suivants à 130°C pendant 2 h.

| | |
|---|---|
| EVA 51/18 | 10 |
| EVA 40/55 | 20 |
| Résine R2 | 20 |
| Kristallex F 100 | 30 |
| Prépolymère NM36 | 20 |

où l'EVA 51/18 est un copolymère éthylène-acétate de vinyle à 51% d'acétate de vinyle, de Melt Index = 18 : Vynathène EY 905 de U.S.I. ;
où l'EVA 40/55 est un copolymère EVA à 40% d'acétate de vinyle, de Melt Index = 55 : Elvax 40 (Du PONT) ;
où le prépolymère NM 36 est un prépolymère PPU liquide classique de CECA S.A., résultant de la condensation de polyols et MDI, d'indice NCO final = 7 ;
   - où Kristallex F100 (Hercules), est une résine d'α-méthyl styrène. L'adhésif formulé a un taux de NCO final de 2,8% .

### c) - Evaluation des performances de l'adhésif termofusible.

| | |
|---|---|
| Tenue SAFT immédiate : | 55°C |
| Teneur SAFT après 2 jours : | >160°C |
| Temps ouvert : | 20 secondes. |

## Revendications

1. Résines tackifiantes modifiées pour la formulation d'adhésifs thermoplastiques monocomposants résultant de la réaction de polyisocyanates sur les résines tackifiantes prises dans le groupe constitué par les colophanes et les esters de colophane et de polyols, les résines styréniques modifiées par le phénol et les résines terpènes phénoliques, caractérisées en ce que leur taux d'isocyanate libre est compris entre 1,5 et 20% .

2. Résines tackifiantes modifiées selon la revendication 1, caractérisées en ce qu'elles résultent de la réaction de polyisocyanates sur des résines terpènes phénoliques du type terpène-diphénol.

3. Résines tackifiantes modifiées selon les revendications 1 et 2, caractérisées en ce que le polyisocyanate dont elles dérivent est le diphénylméthane diisocyanate.

4. Compositions d'adhésifs thermofusibles monocomposants à excellente tenue au fluage comportant
de 5 à 80% d'un polymère thermoplastique,
de 0 à 60% de cires et/ou de paraffines,
de 10 à 80% de résines tackifiantes ,
caractérisées en ce les résines tackifiantes sont des résines modifiées selon la revendication 1.

5. Compositions d'adhésifs thermofusibles monocomposants à excellente tenue au fluage comportant
de 5 à 80% d'un polymère thermoplastique,
de 0 à 60% de cires et/ou de paraffines,
de 10 à 80% de résines tackifiantes ,
caractérisées en ce que les résines tackifiantes sont en totalité ou en partie des résines modifiées selon la revendication 1, et que l'indice d'isocyanate de la composition thermofusible est compris entre 1 et 15.

6. Application des compositions d'adhésifs thermofusibles monocomposants selon les revendications 4 ou 5 à la fabrication d'éponges-grattoirs.

7. Application des compositions d'adhésifs thermofusibles monocomposants selon les revendications 4 ou 5 à la fabrication de matelas de mousse stérilisables.

8. Application des compositions d'adhésifs thermofusibles monocomposants selon les revendications 4 ou 5 aux travaux de menuiserie pour le collage des chants.

9. Application des compositions d'adhésifs thermofusibles monocomposants selon les revendications 4 ou 5 au collage des emballages.

## Patentansprüche

1. Modifizierte klebrigmachende Harze zur Formulierung thermoplastischer Einkomponentenklebstoffe, die aus der Reaktion von Polyisocyanaten mit klebrigmachenden Harzen aus der Gruppe von Kolophoniumharzen und Kolophonium- und Polyolestern, mit Phenol modifizierten Styrolharzen und phenolischen Terpenharzen resultieren, dadurch gekennzeichnet, daß der freie Isocyanatgehalt dieser Harze zwischen 1,5 und 20 % beträgt.

2. Modifizierte klebrigmachende Harze nach Anspruch 1, dadurch gekennzeichnet, daß sie aus der Reaktion von Polyisocyanaten mit phenolischen Terpenharzen des Terpen-Diphenol-Typs resultieren.

3. Modifizierte klebrigmachende Harze nach den Ansprüchen 1 und 2, dadurch gekennzeichnet, daß das Polyisocyanat, von dem sie sich ableiten, Diphenylmethandiisocyanat ist.

4. Zusammensetzungen aus wärmeschmelzbaren Einkomponentenklebstoffen mit ausgezeichnetem Fließverhalten, enthaltend
5 bis 80 % eines thermoplastischen Polymeren,
0 bis 60 % Wachse und/oder Paraffine und
10 bis 80 % klebrigmachende Harze,
dadurch gekennzeichnet, daß die klebrigmachenden Harze modifizierte Harze nach Anspruch 1 sind.

5. Zusammensetzungen aus wärmeschmelzbaren Einkomponentenklebstoffen mit ausgezeichnetem Fließverhalten, enthaltend
5 bis 80 % eines thermoplastischen Polymeren,
0 bis 60 % Wachse und/oder Paraffine und
10 bis 80 % klebrigmachende Harze,
dadurch gekennzeichnet, daß die klebrigmachenden Harze in ihrer Gesamtheit oder teilweise modifizierte Harze nach Anspruch 1 sind und daß der Isocyanatindex der wärmeschmelzbaren Zusammensetzung zwischen 1 und 15 liegt.

6. Anvendung von Zusammensetzungen aus warmeschmelzbaren Eincomponentenklebstoffen nach den Ansprüchen 4 und 5 zur Herstellung von kratzenden Schwammen.

7. Anvendung von Zusammensetzungen aus wärmeschmelzbaren Eincomponentenklebstoffen nach den Ansprüchen 4 und 5 zur Herstellung von Matratzen aus sterilisierbare Schaum.

8. Anvendung von Zusammensetzungen aus wärmeschmelzbaren Eincomponentenklebstoffen nach den Ansprüchen 4 und 5 zur Schreinerarbeit für Schmalseittekleben.

9. Anvendung von Zusammensetzungen aus wärmeschmelzbaren Eincomponentenklebstoffen nach den Ansprüchen 4 und 5 zur Verpackungskleben.

## Claims

1. Modified tackifying resins for the formulation of single-component thermoplastic adhesives, resulting from the reaction of polyisocyanates with tackifying resins taken from the group consisting of rosins and esters of rosin and polyols, phenol-modified styrene-based resins and phenolic terpene resins, characterized in that their free isocyanate content is between 1.5 and 20 %.

2. Modified tackifying resins according to Claim 1, characterized in that they result from the reaction of polyisocyanates with phenolic terpene resins of the terpene-diphenol type.

3. Modified tackifying resins according to Claims 1 and 2, characterized in that the polyisocyanate from which they are derived is diphenylmethane diisocyanate.

4. Single-component hot-melt adhesive compositions with excellent creep resistance, comprising
from 5 to 80 % of a thermoplastic polymer,
from 0 to 60 % of waxes and/or paraffin waxes,
from 10 to 80 % of tackifying resins,
characterized in that the tackifying resins are modified resins according to Claim 1.

5. Single-component hot-melt adhesive compositions with excellent creep resistance, comprising
from 5 to 80 % of a thermoplastic polymer,
from 0 to 60 % of waxes and/or paraffin waxes,
from 10 to 80 % of tackifying resins,
characterized in that the tackifying resins are entirely or partly the modified resins according to Claim 1 and in that the isocyanate value of the hot-melt composition is between 1 and 15.

6. Application of single-component hot-melt adhesive compositions according to claims 4 and 5 to manufacture of sponges-scrapers.

7. Application of single-component hot-melt adhesive compositions according to claims 4 and 5 to manufacture of mattresses made of sterilizable foam.

8. Application of single-component hot-melt adhesive compositions according to claims 4 and 5 to woodworks with edge sticking.

9. Application of single-component hot-melt adhesive compositions according to claims 4 and 5 to packaging sticking.
